# EUROPÄISCHE PATENTANMELDUNG

(11) **EP 3 770 134 A1**
(43) Veröffentlichungstag der Anmeldung: **27.01.2021**
(21) Anmeldenummer: 20186386.7
(22) Anmeldetag: 17.07.2020
(51) Int. Cl.: C04B 28/06, B28B 19/00

(54) **KOMPOSITPLATTE UND VERFAHREN ZUM HERSTELLEN EINER KOMPOSITPLATTE**

(30) Priorität: 17.07.2019 DE 102019119375
(71) Anmelder: Technische Universität Bergakademie Freiberg, 09599 Freiberg (DE)
(72) Erfinder: Bajrami, Adrian, 09599 Freiberg (DE); Bier, Thomas A., 09599 Freiberg (DE)
(74) Vertreter: Sperling, Thomas

(57) **Zusammenfassung**

Die Erfindung betrifft eine Kompositplatte (1), welche eine flächige Substratkomponente (2) und eine zementbasierte Komponente (3.2) aufweist, wobei die zementbasierte Komponente (3.2) als dünne Schicht an der flächigen Substratkomponente (2) hydraulisch abgebunden ist, sowie ein Verfahren zum Herstellen einer Kompositplatte (1), aufweisend folgende Schritte:
- Bereitstellen einer flächigen Substratkomponente (2),
- Bereitstellen einer wasserfeuchten, zementbasierten Komponente (3.1) aus den Bestandteilen Wasser, Zement, Gesteinsmehl und Fließmittel,
- Ausbringen und Vergleichmäßigen der wasserfeuchten, zementbasierten Komponente (3.1) auf der Oberfläche der flächigen Substratkomponente (2) und
- Trocknen der vergleichmäßigten wasserfeuchten, zementbasierten Komponente (3.1), wobei die wasserfeuchte, zementbasierte Komponente (3.1) auf der Substratoberfläche hydraulisch abbindet.

## Beschreibung

Die Erfindung betrifft eine Kompositplatte, insbesondere für den Einsatz als Wandbelag oder Fußbodenbelag, sowie ein Verfahren zum Herstellen einer Kompositplatte.

Ausführungen von Wandbelägen oder Bodenbelägen für den Innenraumbereich oder den Außenbereich können, den jeweiligen Anforderungen entsprechend, aus verschiedenen Materialien, wie Steingut, Stein, Zement, Keramik, Kunststoff, Glas oder Verbundmaterialien, ausgebildet sein. Insbesondere bei der Herstellung von großformatigen, plattenförmigen, keramisch anmutenden Belägen können Materialdicken aufgrund der Materialsprödigkeit nicht beliebig gewählt werden. So ist einerseits die Herstellung von großformatigen Platten mit Materialdicken kleiner als 3 mm nicht oder nur mit erhöhtem Aufwand möglich. Andererseits sind für großformatige Platten herkömmlich bestimmte Mindestdicken erforderlich, um eine ebene Fläche sowie eine ausreichende Stabilität zu gewährleisten. Platten größerer Materialdicke führen jedoch zu einer nicht unerheblichen Gewichtsbelastung und erfordern darüber hinaus eine höhere Belastbarkeit beziehungsweise Tragfähigkeit für einen zu belegenden Untergrund.

Ausführungen von Verbundplatten, insbesondere von mitteldichten Faserplatten beziehungsweise Holzfaserplatten, kurz auch als MDF bezeichnet, oder aus Eternit, ermöglichen geringe Dicken, bieten jedoch keine ausreichende Oberflächenqualität, was zusätzliche Kosten für eine Nachbearbeitung oder Oberflächenveredlung verursachen kann. Mit Ausführungen von mitteldichten Faserplatten als Verbundplatten können aufgrund der wassersaugenden Materialeigenschaften keine hygienischen oder wasserdichten beziehungsweise wasserabweisenden Oberflächen erzeugt werden.

Die der Erfindung zugrundeliegende Aufgabe besteht darin, ein flaches Plattenmaterial bereitzustellen, welches eine großformatige Ausführung mit geringer Schichtdicke sowie geringem Gewicht ermöglicht und den Anforderungen eines keramisch anmutenden Wandbelags oder Bodenbelags gerecht wird. Ferner ist es Aufgabe der Erfindung, ein Verfahren zur Herstellung eines Plattenmaterials vorzuschlagen.

Die Aufgabe wird durch eine Kompositplatte mit den Merkmalen gemäß Patentanspruch 1 und einem Verfahren mit den Merkmalen gemäß Patentanspruch 8 gelöst. Weiterbildungen sind mit den Merkmalen der jeweils abhängigen Patentansprüche angegeben.

Die erfindungsgemäß vorgeschlagene Kompositplatte weist eine flächige Substratkomponente und eine zementbasierte Komponente auf, wobei die zementbasierte Komponente als dünne Schicht an der flächig ausgebildeten Substratkomponente hydraulisch abgebunden ist.
Der Verbund zwischen der Substratkomponente und der zementbasierten Komponente ist dadurch gebildet, dass die zementbasierte Komponente unmittelbar auf der Oberfläche der Substratkomponente hydraulisch abgebunden ist, ohne dass zwischen der Substratkomponente und der zementbasierten Komponente eine zusätzliche chemische Komponente als Haftvermittler oder Grundierung vorgesehen ist.

Als dünne Schicht sind im Sinne der Erfindung Schichtdicken der zementbasierten Komponente von weniger als 1 mm zu verstehen. Vorzugsweise weist die zementbasierte Komponente eine Schichtdicke von maximal 500 µm auf.

Die hydraulisch abgebundene zementbasierte Komponente schafft eine keramisch anmutende Oberfläche, welche aufgrund ihrer geringen Schichtdicke zu einem geringen Gesamtgewicht der erfindungsgemäßen Kompositplatte beiträgt. Die erfindungsgemäße Kompositplatte kann daher auch als großflächiges Plattenformat mit einer geringen Dicke ausgeführt sein. Vorteilhaft kann die erfindungsgemäße Kompositplatte als Bodenbelag in Form von Fliesen, als Wandbelag oder zur Decken-Gestaltung im Innenbereich und im Außenbereich verwendet werden.

Nach einer bevorzugten Ausgestaltung der Erfindung weisen die flächige Substratkomponente und die an der Oberfläche der flächigen Substratkomponente hydraulisch abgebundene, zementbasierte Komponente eine Gesamtdicke von maximal 2,5 mm, insbesondere kleiner als 2 mm, auf.

Von Vorteil ist weiterhin, dass die hydraulisch abgebundene zementbasierte Komponente eine abwischbare und hygienische Oberfläche aufweist. Durch entsprechende Zusätze, welche der zementbasierten Komponente beigemischt sind, kann die von der zementbasierten Komponente ausgebildete Schicht wasserdicht sein oder eine wasserabweisende Oberfläche aufweisen.

Die zementbasierte Komponente ist vorzugsweise aus einem Gemisch ausgebildet, welches zumindest Wasser, Zement und ein Gesteinsmehl aufweist. Bei dem Gesteinsmehl kann es sich um Quarzsteinmehl und/oder Kalksteinmehl handeln. Gemäß einer Ausgestaltung kann anstatt des Gesteinsmehls auch Sand oder Feinsand oder eine Mischung aus Gesteinsmehl und Feinsand verwendet sein. Als Zement kann Portlandzement CEM I 42,5 R oder eine Mischung aus Portlandzement CEM I 42,5 R, Tonerde-Zement und Calciumsulfat eingesetzt sein.

Nach einer Weiterbildung der Erfindung weist die zementbasierte Komponente Kunststoffpulver oder Kunststoffpartikel auf. Die Kunststoffpartikel sind vorzugsweise homogen in der zementbasierten Komponente verteilt. Durch den Einsatz des Kunststoffpulvers beziehungsweise der Kunststoffpartikel wird eine verbesserte Haftung der zementbasierten Komponente auf der Substratkomponente erreicht. Zudem kann durch die Kunststoffpartikel das E-Modul der zementbasierten Komponente verringert und die Flexibilität gesteigert werden, was sich positiv auf die mechanische Belastbarkeit der Kompositplatte auswirkt und die Gefahr von Rissen verringert.
Ferner kann die Oberfläche der zementbasierten Komponente glänzend, strukturiert oder mattiert ausgebildet sein. Eine Strukturierung der Oberfläche wird mit einer Folie erreicht, welche vor dem hydraulischen Abbindeprozess auf die Oberfläche der zementbasierten Komponente aufgebracht wird.

Die flächige Substratkomponente kann ein faserbasiertes Substrat, vorzugsweise ein holzfaserbasiertes Substrat, oder ein gipsbasiertes Substrat sein. Als flächige Substratkomponente kann eine mitteldichte Faserplatte, eine Holzspanplatte oder eine Holzplatte vorgesehen sein.
Nach einer vorteilhaften Ausgestaltung der Erfindung kann als flächige Substratkomponente eine Gipskartonplatte vorgesehen sein. Hinsichtlich der geometrischen Flächenform der erfindungsgemäßen Kompositplatte bestehen keine Beschränkungen.

Die erfindungsgemäße Kompositplatte kann in Formatgrößen mit einer Diagonale von mehr als 2.000 Millimeter ausgebildet sein, wobei die Dicke der Kompositplatte kleiner oder gleich 2,5 mm ist.

Die erfindungsgemäße Kompositplatte ist mit dem nachfolgend beschriebenen erfindungsgemäßen Verfahren herstellbar.

Das Verfahren zum Herstellen einer Kompositplatte weist folgende Schritte auf:
- Bereitstellen einer flächigen Substratkomponente,
- Bereitstellen einer wasserfeuchten, zementbasierten Komponente aus den Bestandteilen Wasser, Zement, Gesteinsmehl und Fließmittel,
- Ausbringen und Vergleichmäßigen der zementbasierten Komponente auf einer Oberfläche der flächigen Substratkomponente und
- Trocknen der vergleichmäßigten zementbasierten Komponente, wobei die zementbasierte Komponente auf der Substratoberfläche hydraulisch abbindet.

Als Substratkomponente kann vorzugsweise eine faserbasierte, vorzugsweise holzfaserbasierte Substratkomponente, oder eine gipsbasierte Substratkomponente bereitgestellt werden. Als flächige Substratkomponente erweisen sich MDF-Platten als besonders geeignet.

Es hat sich gezeigt, dass die Haftung der wasserfeuchten, zementbasierten Komponente an einer rauen oder offenporigen Oberfläche der flächigen Substratkomponente begünstigt wird. Weiterhin wird bei einer rauen oder einer offenporigen Oberfläche ein stärkerer Verbund zwischen der flächigen Substratkomponente und der hydraulisch abgebundenen zementbasierten Komponente ausgebildet. Es ist daher von Vorteil, wenn die flächige Substratkomponente zumindest auf einer Oberflächenseite, auf welche die wasserfeuchte, zementbasierte Komponente aufgebracht wird, eine gewisse Rauheit oder Poren aufweist. Zweckmäßigerweise kann vorgesehen werden, dass die flächige Substratkomponente bei der Bereitstellung aufgeraut wird, bis eine gewünschte Oberflächenrauheit erreicht ist. Ein solcher Schritt kann als Aufrauschritt bezeichnet werden. Weiter vorteilhaft kann das flächige Substratmaterial eine zumindest einseitig ausgebildete wassersaugende Oberfläche aufweisen, wobei die wasserfeuchte, zementbasierte Komponente auf die wassersaugende Oberfläche der flächigen Substratkomponente aufgebracht wird. Unter einer wassersaugenden Oberfläche ist im Sinne der Erfindung eine Oberfläche zu verstehen, welche zur Aufnahme von Feuchtigkeit aus der wasserfeuchten, zementbasierten Komponente geeignet ist.
Als wasserfeuchte, zementbasierte Komponente ist das zumindest aus den Bestandteilen Wasser, Zement, Gesteinsmehl und Fließmittel bereitgestellte frische, vorzugsweise fließfähige Gemisch vor dem hydraulischen Abbinden zu verstehen. Die hydraulisch abgebundene Mischung, welche eine feste Oberfläche auf der wassersaugenden Substratkomponente ausbildet, wird nachfolgend als zementbasierte Komponente bezeichnet.

Es hat sich gezeigt, dass zwischen der flächigen Substratkomponente und der zementbasierten Komponente allein durch das hydraulische Abbinden der wasserfeuchten, zementbasierten Komponente auf der flächigen Substratkomponente ein Haftverbund erreicht wird, ohne dass zusätzliche Haftvermittler erforderlich sind. Eine chemische Vorbehandlung der flächigen Substratkomponente ist daher nicht erforderlich. Es sollte jedoch darauf geachtet werden, dass die Oberfläche der flächigen Substratkomponente vor dem Aufbringen der wasserfeuchten flächigen Substratkomponente frei von Staub oder losen Partikeln ist. Zum Entfernen von Staubablagerungen und losen Partikeln kann die Substratoberfläche unmittelbar vor dem Aufbringen der wasserfeuchten, zementbasierten Komponente mit Druckluft abgeblasen werden.

Nach einer vorteilhaften Ausgestaltung des erfindungsgemäßen Verfahrens wird/werden der wasserfeuchten, zementbasierten Komponente zusätzlich Kunststoffpulver oder Kunststoffpartikel zugemischt. Die Kunststoffpartikel tragen zur allgemeinen Haftverbesserung der zementbasierten Komponente bei. Vorteilhaft wird aufgrund der Kunststoffpartikel die Flexibilität der hydraulisch abgebundenen zementbasierten Schicht begünstigt, sodass die Gefahr von Rissen verringert wird.
Der Einsatz von Fließmitteln erleichtert das Ausbringen und das Vergleichmäßigen der wasserfeuchten, zementbasierten Komponente auf der wassersaugenden Oberfläche der flächigen Substratkomponente. Vorzugsweise können Fließmittel auf Basis von Polycarbonsäureether oder Fließmittel auf Melaminbasis eingesetzt werden.

Gemäß einer weiteren vorteilhaften Ausgestaltung der Erfindung kann der wasserfeuchten, zementbasierten Komponente ein Mittel beigemischt werden, mit welchem die hydraulisch abgebundene zementbasierte Komponente als wasserabweisende oder wasserundurchlässige Schicht ausgebildet wird. Dabei kann der wasserfeuchten, zementbasierten Komponente ein auf die Masse der wasserfeuchten, zementbasierten Komponente bezogener Anteil von 1 % bis 6 % eines wasserabweisenden Mittels beigemischt werden. Das wasserabweisende Mittel kann in flüssiger Form vorliegen und gleichzeitig mit dem Wasser beigemischt werden.
Ferner kann das Fließverhalten durch die Zusammensetzung der Mischung der zementbasierten Komponente beeinflusst werden. So kann vorgesehen werden, beim Bereitstellen der wasserfeuchten, zementbasierten Komponente ein Bestandteilverhältnis von Wasser, Zement, Calciumsulfat und Gesteinsmehl derart zu wählen, dass die bereitgestellte wasserfeuchte, zementbasierte Komponente ein Setzfließmaß zwischen 200 mm und 300 mm aufweist.
Als Zement kann beispielsweise CEM I 42,5 R verwendet werden, wobei anzumerken ist, dass eine höhere Zementklasse zur Verbesserung der Beschichtungseigenschaften der bereitgestellten wasserfeuchten, zementbasierten Komponente beiträgt.

Gemäß einer Ausgestaltung der Erfindung kann beim Bereitstellen der wasserfeuchten, zementbasierten Komponente für das hydraulisch abbindende Bindemittel Zement eine Mischung aus Portlandzement, Tonerde-Zement und Calciumsulfat eingesetzt werden. Ferner besteht die Möglichkeit, Portlandzement, Tonerde-Zement oder Calciumsulfat als Bindemittel einzusetzen.

Gemäß einer weiteren bevorzugten Ausgestaltung der Erfindung wird/werden beim Bereitstellen der wasserfeuchten, zementbasierten Komponente Quarzsteinmehl und/oder Kalksteinmehl als Gesteinsmehl eingesetzt. Ferner kann auch Sand, vorzugsweise Feinsand als Gesteinsmehl beziehungsweise anstatt des Gesteinsmehls eingesetzt werden. Der maximale Korndurchmesser des verwendeten Gesteinsmehls oder Sandes sollte zumindest um das Dreifache kleiner sein als die mit der zementbasierten Komponente auszubildende Schichtdicke. Folglich kann bei einer auszubildenden Schichtdicke der zementbasierten Komponente von 0,5 mm ein Gesteinsmehl eingesetzt werden, dessen Körnung kleiner als 150 µm ist. Vorzugsweise ist die Körnung des Gesteinsmehls oder des Sandes kleiner als 150 µm.

Bei verschiedenen Ausgestaltungen der Erfindung kann ein redispergierbares Pulver eingesetzt werden, welches der wasserfeuchten, zementbasierten Komponente beigemischt wird. Als dispergierbares Pulver beziehungsweise redispergierbares Pulver kann im Sinne der Erfindung ein egalisierendes dispergierbares Polymerpulver, beispielsweise auf Vinylbasis Acetat und Ethylen, angesehen werden. Dispergierbare Pulver beziehungsweise redispergierbare Pulver wirken entschäumend und stabilisieren die Mischung gegen Wasserüberdosierung, sodass durch den Einsatz von dispergierbaren Pulvern beziehungsweise redispergierbaren Pulvern vorteilhaft sehr glatte, ebene Oberflächen der zementbasierten Komponente hergestellt werden können. Das redispergierbare Pulver ist eine Emulsion auf Wasserbasis, welche durch Sprühtrocknung hergestellt wird, und ein Polymerbindemittel, welches auf der Basis des Vinylacetat-Ethylen-Copolymers hergestellt wird. Die Polymerpartikel bilden nach teilweiser Verdampfung von Wasser durch Agglomeration eine Polymerschicht aus und wirken als Bindemittel. Durch die Anwendung des redispergierbaren Polymerpulvers zusammen mit den in der wasserfeuchten, zementbasierten Komponente enthaltenen anorganischen zementhaltigen Mineralien, kann eine Modifikation der Eigenschaften, insbesondere der Oberflächeneigenschaften der zementbasierten Komponente erreicht werden.

Vorteilhaft bilden das redispergierbare Pulver und die wasserfeuchte, zementbasierte Komponente eine durchdringende Netzwerkstruktur und einen kontinuierlichen Polymerfilm in den Poren, wodurch die Bindung zwischen den Aggregaten verstärkt und einige der Poren der zementbasierten Komponente verstopft werden. Durch die Verwendung eines redispergierbaren Pulvers können somit die Sprödigkeit verringert, die Flexibilität gesteigert, die Zugfestigkeit verbessert und die Rissbildungsgefahr verringert werden.

Gemäß einer vorteilhaften Weiterbildung der Erfindung wird beim Bereitstellen der wasserfeuchten, zementbasierten Komponente ein Masseanteil Portlandzement von 4,55 Masse% bis 28 Masse%, ein Masseanteil Tonerde-Zement von 10,85 Masse% bis 25 Masse%, ein Masseanteil Calciumsulfat von 2,45 Masse% bis 10 Masse%, ein Masseanteil Kalksteinmehl von 10 Masse% bis 40 Masse%, ein Masseanteil Quarzmehl von 10 Masse% bis 50 Masse%, ein Masseanteil Fließmittel von 0,7 Masse% bis 1,2 Masse% bezogen auf den Masseanteil der Trockenbestandteile, ein Masseanteil redispergierbares Pulver von 3,5 Masse% bis 8 Masse% bezogen auf den Masseanteil der Trockenbestandteile und einen Masseanteil Wasser von 19 Masse% bis 26,5 Masse% eingesetzt. Dabei beziehen sich die Masseanteile des Fließmittels und des redispergierbaren Pulvers auf die Gesamtmasse der Trockenbestandteile Portlandzement, Tonerde-Zement, Calciumsulfat, Kalksteinmehl und Quarzmehl.

Die bereitgestellte wasserfeuchte, zementbasierte Komponente wird erfindungsgemäß auf der Oberfläche der flächigen Substratkomponente aufgebracht und vergleichmäßigt. Das Vergleichmäßigen kann durch Walzen, Pressen oder Rakeln erreicht werden. Die wasserfeuchte, zementbasierte Komponente wird vorzugsweise durch Kalandrieren vergleichmäßigt. Dabei kann die wasserfeuchte, zementbasierte Komponente mit einer Schichtdicke von vorzugsweise maximal 500 µm vergleichmäßigt werden. Durch das erfindungsgemäße Verfahren können großformartige Kompositplatten mit einer Diagonalen größer 2.000 mm mit geringer Dicke und mit geringem Gewicht hergestellt werden.

Nach einer Weiterbildung des erfindungsgemäßen Verfahrens wird die auf die Substratkomponente aufgebrachte wasserfeuchte, zementbasierte Komponente vor der Vergleichmäßigung mit einer Folie bedeckt. Beim Aufbringen der Folie ist darauf zu achten, dass zwischen der Folie und der wasserfeuchten, zementbasierten Komponente keine Luftblasen eingeschlossen werden.
Die Folie schützt die zur Vergleichmäßigung eingesetzten Walzwerkzeuge oder Presswerkzeuge vor einem direkten Kontakt mit der wasserfeuchten, zementbasierten Komponente. Dadurch wird eine Verschmutzung der Walzwerkzeuge oder Presswerkzeuge vermieden und eine Reinigung der Kontaktwerkzeuge kann entfallen.

Durch die Anwendung einer Folie auf der frischen noch wasserfeuchten, zementbasierten Komponente kann die Oberflächenbeschaffenheit der zementbasierten Komponente beeinflusst werden. Mit dem Einsatz beispielsweise einer strukturierten Folie kann eine strukturierte oder mattierte Oberfläche der Kompositplatte erzeugt werden. Bei der Folie handelt es sich vorzugsweise um eine Kunststofffolie.

Nach einer vorteilhaften Ausgestaltung der Erfindung wird die Folie eine Stunde nach dem Aushärten der zementbasierten Komponente entfernt. Anschließend wird die Folie vorzugsweise gewaschen und wiederverwendet. Bei Raumtemperatur beträgt die Dauer zum Aushärten der zementbasierten Schicht zwischen 40 Minuten und 60 Minuten.

Das Trocknen kann bei Raumtemperatur erfolgen. Zur Beschleunigung des hydraulischen Abbindens der wasserfeuchten, zementbasierten Komponente können auch höhere Temperaturen angewandt werden. Bevor die Trocknungstemperatur erhöht wird, sollte das Trocknen für mindestens 20 Minuten bei einer Temperatur bis maximal 35°C durchgeführt werden, um Spannungen oder Rissen vorzubeugen. Zur Beschleunigung der Aushärtung der zementbasierten Komponente kann/können:
- beim Bereitstellen der wasserfeuchten, zementbasierten Komponente Aushärtungsbeschleuniger beigemischt werden,
- die Zusammensetzung des Zements modifiziert werden,
- eine zusätzliche Temperaturbehandlung vorgesehen werden.

Die Verfahrensschritte Bereitstellen der flächigen Substratkomponente, Bereitstellen der wasserfeuchten, zementbasierten Komponente, Ausbringen und Vergleichmäßigen der wasserfeuchten, zementbasierten Komponente und Trocknen der wasserfeuchten, zementbasierten Komponente können bevorzugt in einem kontinuierlichen Prozess durchgeführt werden.

Weitere Einzelheiten, Merkmale und Vorteile von Ausgestaltungen der Erfindung ergeben sich aus der nachfolgenden Beschreibung von Ausführungsbeispielen mit Bezugnahme auf die zugehörigen Zeichnungen. Es zeigen:
- Fig. 1:: eine schematische Darstellung eines Ausführungsbeispiels der erfindungsgemäßen Kompositplatte und
- Fig. 2:: eine schematische Darstellung einer Prozessstrecke zur kontinuierlichen Herstellung der erfindungsgemäßen Kompositplatte.

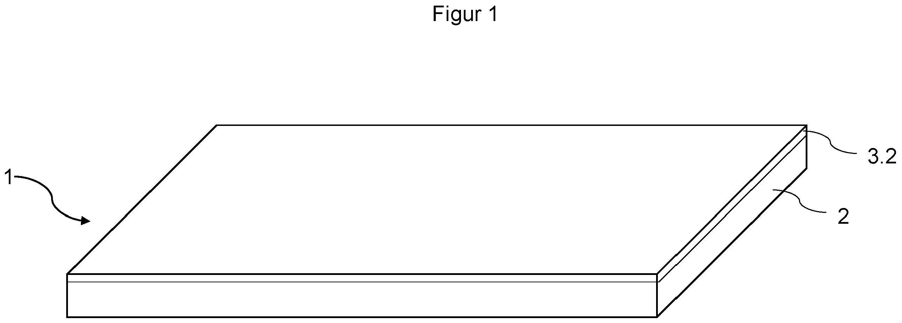

Die **Figur 1** zeigt eine schematische Darstellung eines Ausführungsbeispiels der erfindungsgemäßen Kompositplatte 1. Die Kompositplatte 1 ist mit zwei Komponenten ausgebildet. Die erste Komponente ist eine rechteckige Substratkomponente 2, welche aus einer mitteldichten Faserplatte mit einer Dicke von 2 mm ausgebildet ist. Bei der zweiten Komponente handelt es sich um eine zementbasierte Komponente 3.2, welche als dünne Schicht an der flächigen Substratkomponente 2 hydraulisch abgebunden ist. Die aus der hydraulisch abgebundenen, zementbasierten Komponente 3.2 ausgebildete Schicht weist eine Dicke von maximal 500 µm auf, sodass die Gesamtdicke der Kompositplatte 1 kleiner oder gleich 2,5 mm ist.

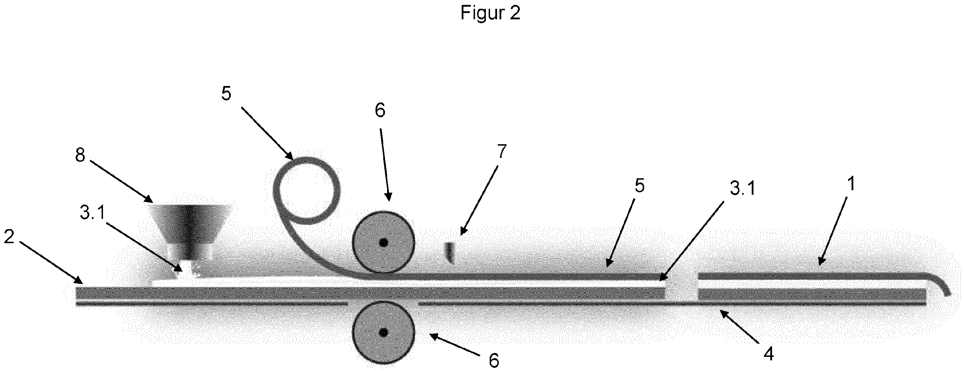

Nachfolgend wird eine Ausgestaltung des erfindungsgemäßen Verfahrens zur kontinuierlichen Herstellung der erfindungsgemäßen Kompositplatte anhand der **Figur 2** näher erläutert.

**Figur 2** zeigt eine Prozessstrecke zur beispielhaften Erläuterung einer kontinuierlichen Herstellung eines Ausführungsbeispiels der erfindungsgemäßen Kompositplatte.

Die Prozessstrecke umfasst einen Auflagetisch 4 zur Auflage der flächigen Substratkomponente 2, einen Mischer 8 zur Bereitstellung der wasserfeuchten, zementbasierten Komponente 3.1, eine Bereitstellung einer Folie 5 zur Abdeckung der auf dem flächigen Substrat 2 aufgebrachten wasserfeuchten, zementbasierten Komponente 3.1, gegenüberliegend angeordnete Walzen 6 zur Vergleichmäßigung der auf dem flächigen Substrat 2 aufgebrachten wasserfeuchten, zementbasierten Komponente 3.1 sowie zum Vorschub auf dem Auflagetisch 4, eine Schneideinrichtung 7 für einen Zuschnitt der bereitgestellten Kompositplatte und eine nicht dargestellte Trockenkammer zum Trocknen von Zuschnitten der Kompositplatte 1.

Nachfolgend wird das Verfahren näher erläutert.

Zunächst wird eine flächige Substratkomponente 2 bereitgestellt und gegebenenfalls aufgeraut und/oder von losen Partikeln befreit beziehungsweise entstaubt. Anschließend wird eine wasserfeuchte, zementbasierte Komponente 3.1 in einem Mischer 8 bereitgestellt, wobei die Bestandteile Wasser (H2O), Portlandzement (PZ), Tonerde-Zement (CAC), Calciumsulfat (CS), Gesteinsmehl, aufweisend Quarzsteinmehl (QM) und Kalksteinmehl (KSM) sowie ein Polycarbonsäureether als Fließmittel (SP) und ein redispergierbares Pulver (RP) in einem Mischer homogenisiert werden. Beim Bereitstellen der wasserfeuchten, zementbasierten Komponente 3.1 werden alle trockenen, pulverförmigen Bestandteile gemischt, wobei flüssige Bestandteile zusammen mit dem Wasser zugemischt werden.

Für die Bereitstellung von 2 Kilogramm der wasserfeuchten, zementbasierten Komponente 3.1 ist gemäß dem Ausführungsbeispiel schrittweise wie folgt vorzugehen:
1. Mischen von Portlandzement (PZ), Tonerde-Zement (CAC), Calciumsulfat (CS), Gesteinsmehl, aufweisend Quarzsteinmehl (QM) und Kalksteinmehl (KSM) für eine Dauer von mindestens einer Minute bei einer Umdrehungsgeschwindigkeit eines Mischwerkzeugs von 600 U/min bis 800 U/min,
2. Beimischen eines Anteils Wasser zu der in 1. bereitgestellten Mischung und Mischen für eine Dauer von mindestens 30 Sekunden bei einer Umdrehungsgeschwindigkeit des Mischwerkzeugs von 600 U/min bis 800 U/min und
3. weiteres Mischen der bereitgestellten Mischung für eine Dauer von mindestens 1 Minute und 30 Sekunden bei einer Umdrehungsgeschwindigkeit des Mischwerkzeugs von 1.800 U/min bis 2.400 U/min.

Das Masseanteilsverhältnis von Wasser (H2O), Portlandzement (PZ), Tonerde-Zement (CAC), Calciumsulfat (CS), Gesteinsmehl, aufweisend Quarzsteinmehl (QM) und Kalksteinmehl (KSM), sowie Fließmittel (SP) und redispergierbares Pulver (RP) zur Bereitstellung der wasserfeuchten, zementbasierten Komponente 3.1 ist der nachfolgenden Tabelle 1 zu entnehmen.

**Tabelle 1**

| Bestandteil | PZ | CAC | CS | KSM | QM | H2O | SP | RP |
|---|---|---|---|---|---|---|---|---|
| Masse% | 10,85 | 17,5 | 7,0 | 27 | 38 | 22,5 | 0,9 | 6 |

Fließmittel (SP) und redispergierbares Pulver (RP) dürfen bei der Berechnung der Wassermenge nicht berücksichtigt werden. Das Fließmittel (SP) und das redispergierbare Pulver (RP) werden basierend auf allen 5 Pulverbestandteilen der Mischung berechnet.

Die derart bereitgestellte wasserfeuchte, zementbasierte Komponente 3.1 wird anschließend auf die flächige Substratkomponente 2, vorteilhaft auf 25 % der zu beschichtenden Fläche der flächigen Substratkomponente, aufgebracht. Um eine Schichtdicke der wasserfeuchten, zementbasierten Komponente 3.1 von 500 µm zu erreichen, wird eine Menge von 1 kg/m² der wasserfeuchten, zementbasierten Komponente 3.1 benötigt.
Die aufgebrachte wasserfeuchte, zementbasierte Komponente 3.1 wird unter Vermeidung eines Luftblaseneinschlusses mit einer Folie 5 abgedeckt.

Nachfolgend wird die auf die Substratkomponente 2 aufgebrachte wasserfeuchte, zementbasierte Komponente 3.1 vorzugsweise mittels der Walzen 6 auf der Oberfläche der flächigen Substratkomponente 2 vergleichmäßigt, wobei die Oberfläche der Folie 5 solange gewalzt wird, bis sowohl eine gewünschte Verteilung als auch eine gewünschte Schichtdicke der wasserfeuchten, zementbasierten Komponente erreicht ist.
Die Walzgeschwindigkeit beträgt vorzugsweise 8 Meter pro Minute bis 15 Meter pro Minute. Anschließend wird die Kompositplatte 1 zugeschnitten und zunächst für mindestens 20 Minuten bei einer Temperatur von maximal 35°C getrocknet, bevor eine Trocknung bei höheren Temperaturen erfolgen kann. Die Folie 5 kann nach einer Stunde von der zementbasierten Komponente entfernt werden.

Mit der nachfolgenden Tabelle 2 sind mögliche Masseanteilsverhältnisse von Wasser (H2O), Portlandzement (PZ), Tonerde-Zement (CAC), Calciumsulfat (CS), Gesteinsmehl, aufweisend Quarzsteinmehl (QM) und Kalksteinmehl (KSM) sowie Fließmittel (SP) und redispergierbares Pulver (RP) zur Bereitstellung der wasserfeuchten, zementbasierten Komponente 3.1 angegeben.

**Tabelle 2**

| Bestandteil | PZ | CAC | CS | KSM | QM | H2O | SP | RP |
|---|---|---|---|---|---|---|---|---|
| Masse% | 4,55 - 28 | 10,85 - 25 | 2,45 - 10 | 10 - 40 | 10 - 50 | 19 - 26,5 | 0,7 - 1,2 | 3,5-8 |

### Bezugszeichenliste

- 1: Kompositplatte
- 2: flächige Substratkomponente
- 3.1: wasserfeuchte, zementbasierte Komponente
- 3.2: zementbasierte Komponente
- 4: Auflagetisch
- 5: Folie
- 6: Walzen
- 7: Schneideinrichtung
- 8: Mischer

## Patentansprüche

1. Kompositplatte (1), welche eine flächige Substratkomponente (2) und eine zementbasierte Komponente (3.2) aufweist, wobei die zementbasierte Komponente (3.2) als dünne Schicht an der flächigen Substratkomponente (2) hydraulisch abgebunden ist.

2. Kompositplatte (1) nach Anspruch 1, **dadurch gekennzeichnet, dass** die zementbasierte Komponente (3.2) eine Schichtdicke kleiner oder gleich 500 µm aufweist.

3. Kompositplatte (1) nach Anspruch 1 oder 2, **dadurch gekennzeichnet, dass** die zementbasierte Komponente (3.2) aus einem Gemisch, aufweisend zumindest Wasser, Zement, Gesteinsmehl, insbesondere Quarzsteinmehl und/oder Kalksteinmehl und Fließmittel, ausgebildet ist.

4. Kompositplatte (1) nach Anspruch 3, **dadurch gekennzeichnet, dass** die zementbasierte Komponente (3.2) Kunststoffpulver aufweist.

5. Kompositplatte (1) nach einem der Ansprüche 1 bis 4, **dadurch gekennzeichnet, dass** die flächige Substratkomponente (2) als ein faserbasiertes Substrat, insbesondere ein holzfaserbasiertes Substrat, oder als ein gipsbasiertes Substrat ausgebildet ist.

6. Kompositplatte (1) nach einem der Ansprüche 1 bis 5, **dadurch gekennzeichnet, dass** die flächige Substratkomponente (2) und die an der Oberfläche der flächigen Substratkomponente ausgebildete zementbasierte Komponente (3.2) eine Gesamtdicke kleiner oder gleich 2,5 mm aufweisen.

7. Verfahren zum Herstellen einer Kompositplatte (1), aufweisend folgende Schritte:
- Bereitstellen einer flächigen Substratkomponente (2),
- Bereitstellen einer wasserfeuchten, zementbasierten Komponente (3.1) aus den Bestandteilen Wasser, Zement, Gesteinsmehl und Fließmittel,
- Ausbringen und Vergleichmäßigen der wasserfeuchten, zementbasierten Komponente (3.1) auf der Oberfläche der flächigen Substratkomponente (2) und
- Trocknen der vergleichmäßigten wasserfeuchten, zementbasierten Komponente (3.1), wobei die wasserfeuchte, zementbasierte (3.1) Komponente auf der Substratoberfläche hydraulisch abbindet.

8. Verfahren nach Anspruch 7, **dadurch gekennzeichnet, dass** der wasserfeuchten, zementbasierten Komponente (3.1) Kunststoffpulver oder Kunststoffpartikel zugemischt wird/werden.

9. Verfahren nach Anspruch 7 oder 8, **dadurch gekennzeichnet, dass** beim Bereitstellen der wasserfeuchten, zementbasierten Komponente (3.1) als Zement eine Mischung aus Portlandzement, Tonerde-Zement und Calciumsulfat eingesetzt wird.

10. Verfahren nach einem der Ansprüche 7 bis 9 **dadurch gekennzeichnet, dass** beim Bereitstellen der wasserfeuchten, zementbasierten Komponente (3.1) ein Gesteinsmehl mit einer Korngröße kleiner als 150 µm eingesetzt wird.

11. Verfahren nach einem der Ansprüche 7 bis 10, **dadurch gekennzeichnet, dass** eine faserbasierte Substratkomponente, insbesondere eine holzfaserbasierte Substratkomponente, oder eine gipsbasierte Substratkomponente bereitgestellt wird.

12. Verfahren nach einem der Ansprüche 7 bis 11, **dadurch gekennzeichnet, dass** die wasserfeuchte, zementbasierte Komponente (3.1) durch Rakeln, Walzen, Pressen oder Kalandrieren auf der Oberfläche der flächigen Substratkomponente (2) vergleichmäßigt wird.

13. Verfahren nach Anspruch 12, **dadurch gekennzeichnet, dass** die wasserfeuchte, zementbasierte Komponente (3.1) vergleichmäßigt wird, bis eine Schichtdicke kleiner oder gleich 500 µm erreicht ist.

14. Verfahren nach einem der Ansprüche 7 bis 13, **dadurch gekennzeichnet, dass** beim Bereitstellen der wasserfeuchten, zementbasierten Komponente (3.1) ein Bestandteilverhältnis von Wasser, Zement, Calciumsulfat und Quarzsteinmehl und/oder Kalksteinmehl derart gewählt wird, dass die bereitgestellte wasserfeuchte, zementbasierte Komponente (3.1) ein Setzfließmaß zwischen 200 mm und 300 mm aufweist.

15. Verfahren nach einem der Ansprüche 7 bis 14, **dadurch gekennzeichnet, dass** das Trocknen für mindestens 20 Minuten bei einer Temperatur bis maximal 35°C durchgeführt wird.

16. Verfahren nach einem der Ansprüche 7 bis 15, **dadurch gekennzeichnet, dass** die Schritte
Bereitstellen der flächigen Substratkomponente (2),
Bereitstellen der wasserfeuchten, zementbasierten Komponente (3.1), Ausbringen und Vergleichmäßigen der wasserfeuchten, zementbasierten Komponente (3.1) und
Trocknen der wasserfeuchten, zementbasierten Komponente (3.1) in einem kontinuierlichen Prozess durchgeführt werden.
